# EUROPEAN PATENT SPECIFICATION

(11) **EP 1 646 452 B1**
(45) Date of publication and mention of the grant of the patent: **24.10.2012**
(21) Application number: 05786255.9
(22) Date of filing: 15.06.2005
(51) Int. Cl.: B29K 105/00, B05C 11/10, B29B 13/02

(54) **SYSTEM FOR DISPENSING VISCOUS LIQUID**
SYSTEM ZUR ABGABE VISKOSER FLÜSSIGKEITEN
SYSTEME POUR DISTRIBUER UN LIQUIDE VISQUEUX

(30) Priority: 15.06.2004 US 579713 P; 15.06.2005 AZ 20050154
(43) Date of publication of application: 19.04.2006
(73) Proprietor: Henkel AG & Co. KGaA, 40589 Düsseldorf (DE)
(72) Inventor: MEHAFFY, Justin A., Hampton, NJ 08827 (US); MAZLOTTI, Joseph, Loutsville, KY 40223 (US); DUCKWORTH, David, Blackburn BB1 9HZ (GB)
(86) International application number: PCT/AZ2005/000003
(87) International publication number: WO 2005/123268

(56) References cited:
- FR-A- 2 535 627
- GB-A- 675 569
- US-A- 3 559 619
- US-A- 3 773 069
- US-A- 6 033 726

## Description

### FIELD OF THE INVENTION

The invention relates to liquid dispensing technology and, more specifically, to adhesive dispensers using auto-feed units, heated tanks, hoses and dispensing valves.

### BACKGROUND OF THE INVENTION

Liquid dispensing equipment currently available to the adhesive industry is designed and manufactured for a plurality of purposes. These units are manufactured to accommodate dispensing a wide range of differently heated liquids, e.g., a liquid may be dispensed at a substantially higher or lower temperature than that used for a prior heated liquid. These units can operate at pressures of up to 69 bar (1000 pst), temperatures of up to 232°C (450°F), and pump rates of 75 lbs/hr.

Apparatuses for melting and dispensing adhesives are known from documents US 4485941, US 4121535 or US 377 30 69.

Many current end-of-line packaging operations, also known as end-of-line case and carton sealing, in particular those using adhesives formulated for application at low temperatures, e.g., a temperature about 135°C (275°F) or lower, operate at the lowest end of these units' design parameters. As such, conventional heating and dispensing units are most often over-engineered for use in typical packaging operations. Use of such equipment results in higher material costs, greater complexity of operation, greater complexity of parts and process variability, and increased cost and frequency of parts replacement including costs associated with maintaining an inventory of spare parts.

Moreover, this process variability in units operating at higher temperatures causes adhesive degradation, adhesive stagnation, air pocketing and the like and exacerbates the need for system maintenance. Use of high temperatures contributes to char formation and related overheating problems which then adversely affect dispenser performance. In addition, present dispenser configurations have high temperature surfaces exposed to personnel. As such, measures must be taken to guard or insulate the dispensing equipment from nearby personnel. However, this also reduces the ease with which the equipment may be serviced by such personnel.

Recent innovations in adhesive chemistry have resulted in adhesives that require minimal heating and pumping requirements. It would be beneficial to have a low cost, low maintenance, easy to use and install equipment designed specifically for low application temperature end-of-line packaging adhesives. The current invention fulfills this need.

### SUMMARY OF THE INVENTION

The invention generally comprises a low cost, simple to operate hot melt dispensing apparatus. The apparatus of the invention has a maximum operating temperature of 135°C (275°F) and is useful for processing (melting and dispensing) hot melts. The apparatus of the invention reduces energy usage, reduces burn hazards, requires less insulation, and enables use of low cost materials.

The apparatus of the invention comprises at least a first chamber and at least a second chamber, wherein at least one chamber is adapted to receive an adhesive in its solid form, and at least another chamber is adapted to melt and/or maintain an adhesive in its molten form. In the practice of the invention, the chamber adapted to receive solid adhesive is maintained at a substantially lower temperature than the chamber adapted to melt and/or hold molten adhesive.

Preferable, the first and second chambers are integrally connected. The chambers may be made of plastic or metal, e.g., aluminum. In one embodiment, the chamber adapted to receive solid adhesive and the chamber adapted to heat the adhesive to a molten state both comprise a plastic. In another embodiment, the chamber adapted to receive solid adhesive comprises plastic and the chamber adapted to heat the adhesive to a molten state comprises aluminum or other metal.

The apparatus of the invention further comprises a pump means for transporting molten adhesive, and the apparatus maintains the molten adhesive at a temperature of about 93,3°C (200°F), maintains fluid pressures of less than 6,9 bar (100 psi) and pump rates of less than 4,54 kg/h (10 lbs/h).

### BRIEF DESCRIPTION OF THE DRAWING FIGURE

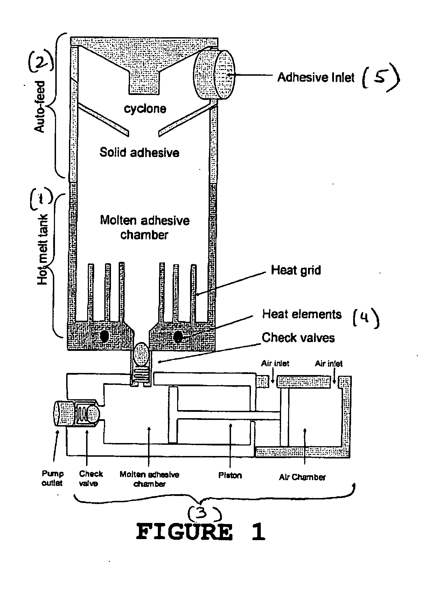

Fig. 1 is a cross sectional side view of an embodiment of the apparatus of the invention.

### DETAILED DESCRIPTION OF THE INVENTION

The dispensing apparatus (also referred to herein as a dispensing unit or dispensing system) of the invention comprises a feed tank (hereinafter also referred to as a first chamber) integrally connected to a heating tank (hereinafter also referred to as a second chamber).

A dispensing unit or system is defined herein to be a structure adapted to receive solid adhesive and to melt and maintain the adhesive in a molten form, and may include means for transporting the molten adhesive for end use application onto a substrate surface.

Low temperature application or low application temperature refer to the temperature of the adhesive at the time of application to the substrate, which temperatures are typically about 135°C (275°F) or less, and down to about 93,3°C (200°F).

The invention can be illustrated by referring to Fig. 1. While the embodiment set forth in the drawing Figure and discussed herein refers to a cylindrical shaped unit, it is to be understood that the shape of the unit and/or parts making up the unit is not to be so limited. Each chamber may, independently, comprise a single wall (e.g., is cylindrical in shape), or a plurality of walls (e.g., is triangular, square, rectangular, trapezoidal, pentagonal, hexagonal, octagonal, or the like).

Fig. 1 shows a dispensing unit comprising a pneumatic particulate feed system (also referred to as chamber A) and a heating system (also referred to as chamber B).

The auto feed chamber A is linked to the melting chamber B. In accordance with the invention, melting chamber B is linked to chamber A using materials whose construction and design provides insulating properties superior to those used for the melting chamber portion of the unit thereby reducing undue heating and blocking of materials present in chamber A and reducing potential for employee burns. The chambers A and B respectively may be manufactured of different materials, e.g., the upper auto feed portion or chamber of the unit may be composed of plastic (e.g., PVC) while the lower melting chamber is composed of aluminum. Alternatively, a non-heat conductive interface material may be located at the interface of chambers A and B.

While the drawing figure shows upper and lower configurations of the auto feed and melting chambers, respectively, it is to be understood that the chambers need not be placed in vertical alignment, but may be placed in a side-by-side configuration or other desired configuration.

Fig. 1 shows auto-feed chamber A and hot melt tank chamber B. Solid adhesive, in the form of pellets or other such conventional form, is introduced into the feed tank via an adhesive inlet valve, e.g. by blowing or other conventional means. Means for removing air accompanying the introduction of the solid adhesive into the auto feed is shown (cyclone). If desired baffles or other such means may be present in the auto-feed chamber A which function to direct solid adhesive toward the hot melt tank chamber B and/or deflect heat thereby providing further insulative protection to the solid adhesive present in the auto-feed tank.

The melting chamber B (hot melt tank) is heated and may be made of plastic or metal. The hot melt tank comprises heating means, and may include a grid heated via either cartridge or band heater. A plurality of heat elements may be employed throughout the tank to optimize melt down and molten feed rates. The heaters may be positioned in such a way to provide heat to both the adhesive in the hot melt tank as well as the pump mechanism. Alternatively separate sets of heating elements may be used to provide heat to the adhesive in the hot melt tank and to adhesive in the pump mechanism. Heating elements will typically be thermostatically controlled and will comprise circuitry for providing electrical power. Preferably, the apparatus of the invention comprises a hot melt tank with heating elements and control capable of reaching maximum operating temperatures of about 135°C (275°F).

The heated chamber, or hot melt tank, is connected to a dispensing pump. In Fig. 1, the hot melt tank is connected to the dispensing pump through a one way check valve which allows material into the molten chamber of the pump (on the piston's return stroke) while restricting reverse flow when under pressure from the pump (e.g., due to forward pumping stroke of piston). While the pump show in Fig. 1 is piston pump, other types of pumps may be used in the practice of the invention. Dispensing may also be accomplished via a gear pump, for example.

Means for automatically maintaining adhesive level will typically be included and closed systems, which prevent contamination and help to keep work areas safe and clean, are preferred.

## Claims

1. An apparatus for feeding, melting and dispensing a hot melt adhesive comprising a heating chamber (1) for melting a hot melt adhesive and/or maintaining a hot melt adhesive in its molten form, a means for feeding adhesive into the heating chamber (1), and means for dispensing molten adhesive from the heating chamber, **characterized in that** the heating chamber (1) is controlled to have a maximum operating temperature of 135° C and comprises heating elements (4) that are thermostatically controlled to reach a maximum operating temperature of 135°C (275°F) and to maintain molten adhesive at a temperature of about 93.3°C (200°F).

2. The apparatus of claim 1 wherein said means for feeding adhesive into the heating chamber comprises an auto feed chamber (2).

3. The apparatus of claim 2 wherein the auto feed chamber (2) is integrally connected to the heating chamber (1).

4. The apparatus of any of claims 1-3 comprising a dispensing valve.

5. The apparatus of any of claims 1-4 wherein the heating chamber is connected to a dispensing pump (3).

6. The apparatus of claim 5 wherein the dispensing pump (3) is a piston pump.

7. The apparatus of claim 5 wherein the dispensing pump (3) is a gear pump.

8. The apparatus of any of claims 1-7 further comprising a means whereby the dispensed molten adhesive is transported for end use application onto a substrate surface.

9. The apparatus of claim 8 wherein said means for transporting said molten adhesive is a heated hose.

10. The apparatus of claim 1 comprising an adhesive inlet valve (5) for introducing solid adhesive into the auto feed chamber (2).

11. The apparatus of any of claims 1-10 comprising a means for automatically maintaining adhesive level.

12. The apparatus of any of claims 1-11 wherein the heating chamber (1) is plastic.

13. The apparatus of any of claims 1-11 wherein the heating chamber (1) is metal.

14. The apparatus of any of claims 1-11 wherein the heating chamber (1) is aluminum.

## Patentansprüche

1. Vorrichtung zum Zuführen, Schmelzen und Abgeben eines Schmelzklebstoffs, umfassend eine Heizkammer (1) zum Schmelzen eines Schmelzklebstoffs und/oder Halten eines Schmelzklebstoffs in seiner geschmolzenen Form, ein Mittel zum Zuführen von Klebstoff in die Heizkammer (1) und ein Mittel zum Abgeben von geschmolzenem Klebstoff aus der Heizkammer, **dadurch gekennzeichnet, dass** die Heizkammer (1) derart gesteuert ist, dass sie eine maximale Betriebstemperatur von 135 °C aufweist, und Heizelemente (4) umfasst, die derart thermostatgesteuert sind, dass sie eine maximale Betriebstemperatur von 135 °C (275 °F) erreichen und geschmolzenen Klebstoff bei einer Temperatur von ungefähr 93,3 °C (200 °F) halten.

2. Vorrichtung nach Anspruch 1, wobei das Mittel zum Zuführen von Klebstoff in die Heizkammer eine Kammer mit automatischer Zuführung (2) umfasst.

3. Vorrichtung nach Anspruch 2, wobei die Kammer mit automatischer Zuführung (2) einstückig mit der Heizkammer (1) verbunden ist.

4. Vorrichtung nach irgendeinem der Ansprüche 1-3, umfassend ein Abgabeventil.

5. Vorrichtung nach irgendeinem der Ansprüche 1-4, wobei die Heizkammer mit einer Abgabepumpe (3) verbunden ist.

6. Vorrichtung nach Anspruch 5, wobei die Abgabepumpe (3) eine Kolbenpumpe ist.

7. Vorrichtung nach Anspruch 5, wobei die Abgabepumpe (3) eine Zahnradpumpe ist.

8. Vorrichtung nach irgendeinem der Ansprüche 1-7, ferner umfassend ein Mittel, durch welches der abgegebene geschmolzene Klebstoff für den Verwendungszweck auf eine Substratoberfläche transportiert wird.

9. Vorrichtung nach Anspruch 8, wobei das Mittel zum Transportieren des geschmolzenen Klebstoffs ein beheizter Schlauch ist.

10. Vorrichtung nach Anspruch 1, umfassend ein Klebstoffeinlassventil (5) zum Einbringen von festem Klebstoff in die Kammer mit automatischer Zuführung (2).

11. Vorrichtung nach irgendeinem der Ansprüche 1-10, umfassend ein Mittel zur automatischen Aufrechterhaltung des Füllstands des Klebstoffs.

12. Vorrichtung nach irgendeinem der Ansprüche 1-11, wobei die Heizkammer (1) aus Kunststoff besteht.

13. Vorrichtung nach irgendeinem der Ansprüche 1-11, wobei die Heizkammer (1) aus Metall besteht.

14. Vorrichtung nach irgendeinem der Ansprüche 1-11, wobei die Heizkammer (1) aus Aluminium besteht.

## Revendications

1. Appareil pour alimenter, faire fondre et distribuer un adhésif thermofusible comprenant une chambre de chauffage (1) pour faire fondre un adhésif thermofusible et/ou maintenir un adhésif thermofusible à sa forme fondue, un moyen pour alimenter un adhésif dans la chambre de chauffage (1), et un moyen pour distribuer l'adhésif à l'état fondu hors de la chambre de chauffage, **caractérisé en ce que** la chambre de chauffage (1) est contrôlée de manière à avoir une température opérationnelle maximum de 135°C et comprend des éléments de chauffage (4) qui sont contrôlés thermostatiquement pour atteindre une température opérationnelle maximum de 135°C (275°F) et pour maintenir l'adhésif à l'état fondu à une température d'environ 93,3°C (200°F).

2. Appareil selon la revendication 1 dans lequel ledit moyen pour alimenter un adhésif dans la chambre de chauffage comprend une chambre à auto-alimentation (2).

3. Appareil selon la revendication 2 dans lequel la chambre à auto-alimentation (2) est connectée de manière intégrale à la chambre de chauffage (1).

4. Appareil selon l'une quelconque des revendications 1 à 3 comprenant une soupape de distribution.

5. Appareil selon l'une quelconque des revendications 1 à 4 dans lequel la chambre de chauffage est connectée à une pompe de distribution (3).

6. Appareil selon la revendication 5 dans lequel la pompe de distribution (3) est une pompe à piston.

7. Appareil selon la revendication 5 dans lequel la pompe de distribution (3) est une pompe à engrenages.

8. Appareil selon l'une quelconque des revendications 1 à 7 comprenant en outre un moyen par lequel l'adhésif à l'état fondu distribué est transporté pour une application d'utilisation finale sur une surface de substrat.

9. Appareil selon la revendication 8 dans lequel ledit moyen pour transporter ledit adhésif à l'état fondu est un tuyau souple chauffé.

10. Appareil selon la revendication 1 comprenant une soupape d'entrée d'adhésif (5) pour introduire un adhésif solide dans la chambre à auto-alimentation (2).

11. Appareil selon l'une quelconque des revendications 1 à 10 comprenant un moyen pour maintenir automatiquement le niveau d'adhésif.

12. Appareil selon l'une quelconque des revendications 1 à 11 dans lequel la chambre de chauffage (1) est en plastique.

13. Appareil selon l'une quelconque des revendications 1 à 11 dans lequel la chambre de chauffage (1) est en métal.

14. Appareil selon l'une quelconque des revendications 1 à 11 dans lequel la chambre de chauffage (1) est en aluminium.
